# EUROPEAN PATENT SPECIFICATION

(11) **EP 2 535 269 B1**
(45) Date of publication and mention of the grant of the patent: **16.10.2013**
(21) Application number: 11400035.9
(22) Date of filing: 17.06.2011
(51) Int. Cl.: B64C 27/615, B64C 27/473

(54) **Rotor blade with active flap**
Rotorblatt mit aktiver Klappe
Pale de rotor dotée d'un rabat actif

(43) Date of publication of application: 19.12.2012
(73) Proprietor: EUROCOPTER DEUTSCHLAND GmbH, 86609 Donauwörth (DE)
(72) Inventor: Altimikus, Andree, 85635 Höhenkirchen- Siegertsbrunn (DE); Maucher, Christoph, 81371 München (DE)
(74) Representative: GPI & Associés

(56) References cited:
- EP-A2- 0 814 019
- EP-B1- 1 966 045
- WO-A1-2004/069651
- "Experimentelle Untersuchung von Rückströmklappen auf Tragflügeln zur Beeinflussung von Strömungsablösungen" In: MEYER, R. K. J.: "Forschungsberichte aus den Ingenieurwissenschaften", 20 December 2000 (2000-12-20), MENSCH UND BUCH VERLAG, XP002665590, pages FP,60-66, * page 63 * * page 64, line 29 *
- Patone, G.; Müller, W.: "Aeroflexible Oberflächenklappen als ''Rückstrombremsen'' nach dem Vorbild der Deckfedern des Vogelflügels -Technical Report 5/96", , 1 May 2011 (2011-05-01), XP002665589, Retrieved from the Internet: URL:http://www.bionik.tu-berlin.de/user/gi ani/klappen/evo.html [retrieved on 2011-12-15]

## Description

The invention relates to a rotor blade with active flap, particularly a main rotor blade with active flap of helicopters with the features of the preamble of claim 1.

From Patone, G. and Müller, W. "Aeroflexible Oberflächenklappen als "Rückströmbremsen" nach dem Vorbild der Deckfedern des Vogelflügels" Technical Report TR-96-05, TU Berlin, and Meyer, R. K. J., "Experimentelle Untersuchung von Rückströmklappen auf Tragflügeln zur Beeinflussung von Strömungsablösungen", Forschungsberichte aus den Ingenieurwissenschaften, Mensch und Buch Verlag, Dissertation, TU Berlin, 20.12.2000, it is known to reduce or eliminate flow stall along a principally fixed wing by a reflux break flap. The passive solution proposed in the above mentioned documents is applicable to fixed wing aircraft but not to helicopter rotor blades. The centrifugal loads of the rotor blade would prevent any surface flap from lifting of the blade structure.

One problem of a highly loaded rotor blade is stall separation starting radially beyond the reverse flow region of a retreating rotor blade. The area of flow separation is growing radius wise from inboard to outboard with increasing forward flight speed or increasing load in steady turn flight. The stall leads to strong unsteady aerodynamic pitching moments at the rotor blade that integrate up to strong unsteady control loads. The strong control loads limit the life cycle of mechanical components in the load branch.

The document EP1966045B1, which represents the closest prior art, discloses a rotor blade for a rotary wing aircraft with a soft trailing edge bender. This solution tackles the problem of vibrations due to air vortices at the rotor blade by a global twist deformation of the blade, due to the socalled servo-effect, globally reducing the incidence angles in the said radial and azimuthal region. Said soft trailing edge suffers from other disadvantages: the cross sectional centre of gravity is locally displaced rearwards towards the trailing edge and the aerofoil shape needs to be filled up by a flexible material that brings additional weight to the trailing edge region and possibly reduced efficiency of said soft trailing edge.

The document WO2004069651 describes a deformable aerodynamic profile provided with piezo actuators.

The document EP0814019 describes an actuating device which is remotely controllable, for example in helicopter rotor blades. This device has a shape memory alloy actuating member. In changing of position of a camber-adjusting tab, two active members act one against the other to modify aerodynamically properties of the rotor blade.

The objective of the invention is to provide an improved rotor blade with active flap, particularly an improved main rotor blade with active flap of helicopters.

The solution is provided with an improved rotor blade with active flap, particularly an improved main rotor blade with active flap of helicopters with the features of claim 1.

According to the invention a rotor blade with active flap, in particular a main rotor blade with active flap of helicopters, comprises a profile body including an upper surface, reversibly bendable flexural actuators and movable rotor blade flaps. The movable rotor blade flaps are actuated by the flexural actuators. According to the invention the reversibly bendable flexural actuators and the movable rotor blade flaps are adapted to the upper surface of the profile body to allow with the active elements attached on to the blade surface a force against the centrifugal loads of the rotor blade so that the same benefit is created as for the passive fixed wing by shielding the reflux region of the separation area against an upstream propagation and to avoid the negative pitching moments. A principal benefit of the inventive rotor blade is a control load reduction for highly loaded flight conditions at the rotor blades of a helicopter, said reduction extending significantly the component's life cycle in the control path. A further principal benefit of the inventive rotor blade is an easy and cost effective add-on solution tackling directly any aerodynamic effects on the rotor blade. The inventive rotor blade is light weight and does not alter the blade dynamic properties significantly. The inventive rotor blade with an active solution is retrofit able as it does not require any modifications to the basic rotor blade structure and finally the inventive rotor blade has very limited electric power consumption if piezo patches are used for the reversibly bendable flexural actuators.

According to a preferred embodiment of the invention the upper surface of the profile body is provided with a pocket encompassing the at least one reversibly bendable flexural actuator and the at least one movable rotor blade flap in order to maintain the cross sectional centre of gravity and to avoid said cross sectional centre of gravity to be locally displaced rearwards towards the trailing edge.

According to a further preferred embodiment of the invention the pocket with the reversibly bendable flexural actuators and the movable rotor blade flaps extend in chordwise direction rearward from essentially the quarter chord line over a length of approximately half the chord.

According to a further preferred embodiment of the invention the pocket with the reversibly bendable flexural actuators and the movable rotor blade flaps extend in radial direction from 20-40%r/R to approximately 80-85%r/R with R being the length of the rotor blade. Said arrangement of the pocket with the reversibly bendable flexural actuators and the movable rotor blade flaps keeps the reverse flow area of the rotor blade next to the hub drive free and provides an activated span along the radius of the rotor blade to the zone where the lower separation line is incident with the trailing edge of the rotor blade.

According to a further preferred embodiment of the invention the reversibly bendable flexural actuators comprise a bimorph part.

According to a further preferred embodiment of the invention the reversibly bendable flexural actuators comprise a trimorph part.

According to a further preferred embodiment of the invention the reversibly bendable flexural actuators and the movable rotor blade flaps comprise respectively an interface part, an active part and a passive porous part, with the passive porous material part avoiding any difference of pressure between the upper and the lower side of the passive porous part.

According to a further preferred embodiment of the invention the reversibly bendable flexural actuators are connected in essentially radial direction alongside the movable rotor blade flaps.

According to a further preferred embodiment of the invention the reversibly bendable flexural actuators are respectively connected in essentially chordwise direction along preferably both sides of the respective movable rotor blade flaps for greater angles.

According to a further preferred embodiment of the invention the reversibly bendable flexural actuators are respectively connected with an angle to the chordwise direction along preferably both sides of the respective movable rotor blade flaps for less reset forces and longer flaps for more aerodynamic effects.

According to a further preferred embodiment of the invention the reversibly bendable flexural actuators and the movable rotor blade flaps are aligned in essentially radial direction with radially inside movable rotor blade flaps overlapping like shingles radially adjacent outside flaps for support between said flaps along a radial direction of the rotor blade.

A preferred embodiment of the invention is described with reference to the attached drawings.
Fig. 1 shows a spherical view of a rotor blade according to the invention,
Fig. 2 shows a cross sectional view of a rotor blade according to the invention,
Fig. 3 shows a cross sectional view of an active flap of a rotor blade according to the invention,
Fig. 4 shows a schematic top view of a preferred active flap of a rotor blade according to the invention, and
Fig. 5 shows a schematic top view of a further preferred active flap of a rotor blade according to the invention.

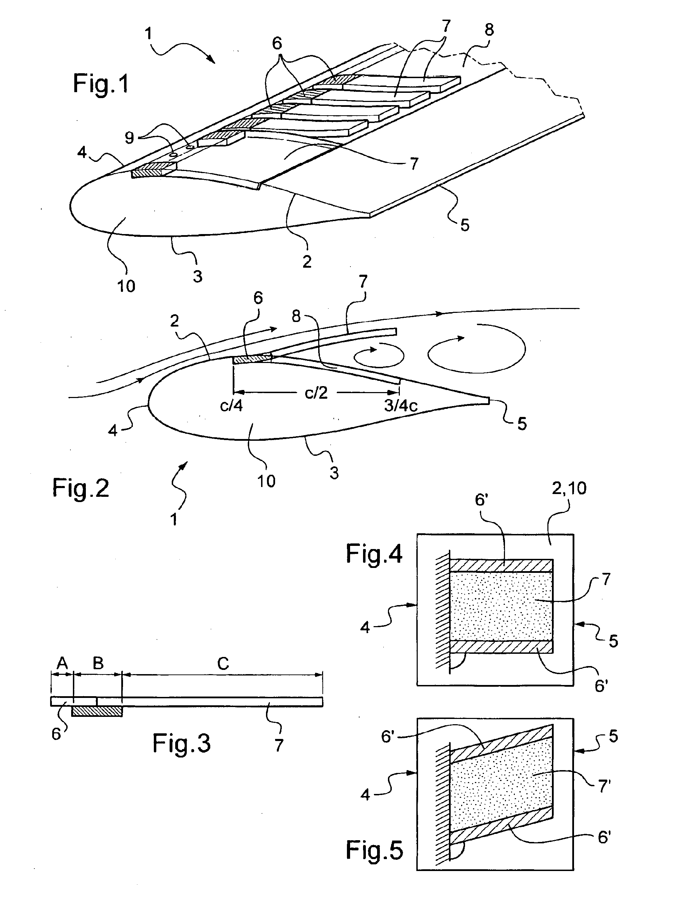

According to Fig. 1, 2 an aerodynamic profile body 10 of a rotor blade 1 of a helicopter (not shown) is provided with an upper surface 2, a lower surface 3, a leading edge 4 and a trailing edge 5. Reversibly bendable flexural actuators 6 are drivingly connected to movable rotor blade flaps 7. The profile body 10 is provided with a pocket 8 in the upper surface 2, said pocket 8 extending from c/4 to 3c/4 with c corresponding to the chord line of the rotor blade 1. The profile body 10 is made of a synthetic compound material.

The reversibly bendable flexural actuators 6 are mounted by rivets 9, screws, glue, etc. into the pocket 8 from c/4 along the radial direction of the rotor blade 1 from 20-40%r/R to approximately 85%r/R with R being the length of the rotor blade 1 comprising the electrical interface of the reversibly bendable flexural actuators 6 with the rotor blade 1. The remaining area of the pocket 8 is essentially covered with the movable rotor blade flaps 7 being respectively attached to the associated reversibly bendable flexural actuators 6. The passive movable rotor blade flaps 7 are radially overlapping like shingles with the radially inside flaps 7 overlapping the radially adjacent outside flaps 7.

The pocket 8 is shaped to allow a smooth surface 2 of the profile body 10 with the reversibly bendable flexural actuators 6 and the passive movable rotor blade flaps 7 aligned flat in the pocket 8.

The reversibly bendable flexural actuators 6 comprise a piezo patch for electrically driving the movable rotor blade flaps 7. The movable rotor blade flaps 7 are made of porous material.

In an actuated position the movable rotor blade flaps 7 are pivoted by the associated reversibly bendable flexural actuators 6 out of the pocket 8 to form predetermined angles with the reversibly bendable flexural actuators 6 (see Fig. 2).

According to Fig. 3 corresponding features are referred to with the references of Fig. 1, 2. A passive interface part A, short in chord direction, comprises the electrical and mechanical interface of the reversibly bendable flexural actuators 6 with the profile body 10. An active part B follows the passive interface part A and comprises the active at least bi-morph if not tri-morph bender zone with the piezo patch of the reversibly bendable flexural actuators 6. A third part C consists of the passive movable rotor blade flaps 7 of porous material with reduced bending stiffness.

A control processor (not shown) is provided to control angles and azimuth position of the flaps 7 radial along the rotor blade 1, said radial activation area being determined by a control algorithm. Each individual piezo patch is activated by a voltage impulse of a predetermined phase and duration according to its radial position to overcome any centrifugal loads acting on the flaps 7 and according to its azimuth position to open the reflux flap in the retreating blade range where stall occurs.

According to Fig. 4 corresponding features are referred to with the references of Fig. 1-3. Two reversibly bendable flexural actuators 6' are respectively connected in essentially chordwise direction along both sides of the movable rotor blade flap 7. The reversibly bendable flexural actuators 6' and the movable rotor blade flaps 7 are rectangular to the radial direction of the rotor blade 1.

According to Fig. 5 corresponding features are referred to with the references of Fig. 1-4. The two reversibly bendable flexural actuators 6' are respectively connected with an angle to the chordwise direction along both sides of the movable rotor blade flap 7'.

In a method to operate the rotor blade with active flap, during forward motion of the rotor blade 1 or at low loads the reversibly bendable flexural actuators 6, 6' and the movable rotor blade flaps 7, 7' are embedded in the pocket 8 and smoothly adapted to the upper surface 2 of the rotor blade 1.

According to a function of control angles and azimuth position of the rotor blade 1 the radial activation area on the upper surface 2 of the rotor blade 1 is determined by a control algorithm. The reversibly bendable flexural actuators 6, 6' are individually activated by a voltage impulse of predetermined phase and duration according to their radial positions along the rotor blade 1 to pivot the movable rotor blade flaps 7, 7' out of the pocket 8 to prevent the air vortices from progressing from the trailing edge 5 towards the leading edge 4 of the rotor blade 1 and thus reduce stall along the rotor blade 1 said vortices contributing to pivot the movable rotor blade flaps 7, 7' out of the pocket 8.

Having passed the stall region and after deactivation of the reversibly bendable flexural actuators 6, 6' the flow together with the centrifugal loads will re-attach and close the associated flaps 7, 7'.

### Reference List

- 1: rotor blade
- 2: upper surface
- 3: lower surface
- 4: leading edge
- 5: trailing edge
- 6: reversibly bendable flexural actuators
- 7: movable rotor blade flaps
- 8: pocket
- 9: rivets, screws, etc.
- 10: profile body

## Claims

1. A rotor blade (1) with at least one active flap (7, 7), in particular a main rotor blade (1) with at least one active flap (7, 7') of helicopters, comprising a profile body (10) including an upper surface (2), at least one reversibly bendable flexural actuator (6, 6') and the at least one active movable rotor blade flap (7, 7'), the at least one active movable rotor blade flap (7, 7') being actuated by the at least one flexural actuator (6, 6'),
**characterized in that** the at least one reversibly bendable flexural actuator (6, 6') and the at least one active movable rotor blade flap (7, 7') are adapted to the upper surface (2) of the profile body (10).

2. The rotor blade (1) according to claim 1,
**characterized in that** the upper surface (2) of the profile body (10) is provided with a pocket (8) encompassing the at least one reversibly bendable flexural actuator (6, 6') and the at least one movable rotor blade flap (7, 7').

3. The rotor blade (1) according to claim 2,
**characterized in that** the pocket (8) with the at least one reversibly bendable flexural actuator (6, 6') and the at least one movable rotor blade flap (7, 7') extend in chordwise direction from the quarter chord line c/4 over a length of half the chord c to the three quarter chord line 3c/4.

4. The rotor blade (1) according to claim 2,
**characterized in that** the pocket (8) with the at least one reversibly bendable flexural actuator (6, 6') and the at least one movable rotor blade flap (7, 7') extend in radial direction from 20-40%r/R to approximately 80-85%r/R with R being the length of the rotor blade (1).

5. The rotor blade (1) according to claim 1,
**characterized in that** the at least one reversibly bendable flexural actuator (6, 6') comprises a bimorph part.

6. The rotor blade (1) according to claim 1,
**characterized in that** the at least one reversibly bendable flexural actuator (6, 6') comprise a trimorph part.

7. The rotor blade (1) according to claim 5 or 6,
**characterized in that** the at least one reversibly bendable flexural actuator (6, 6') and the at least one movable rotor blade flap (7, 7') comprise an interface part, an active part and a passive porous part.

8. The rotor blade (1) according to claim 1,
**characterized in that** the at least one reversibly bendable flexural actuator (6) is connected in essentially radial direction alongside the at least one movable rotor blade flap (7).

9. The rotor blade (1) according to claim 1,
**characterized in that** at least one reversibly bendable flexural actuator (6') is connected in essentially chordwise direction along preferably both sides of the at least one movable rotor blade flap (7').

10. The rotor blade (1) according to claim 1,
**characterized in that** the at least one reversibly bendable flexural actuator (6') is connected with an angle to the chordwise direction along preferably both sides of the at least one movable rotor blade flap (7').

11. The rotor blade (1) according to claim 1,
**characterized in that** more than one reversibly bendable flexural actuator (6, 6') and more than one movable rotor blade flap (7, 7') are aligned in essentially radial direction with radially inside movable rotor blade flaps (7, 7') overlapping like shingles radially adjacent outside flaps (7, 7').

## Patentansprüche

1. Ein Rotorblatt (1) mit mindestens einer aktiven Klappe (7, 7'), insbesondere ein Hauptrotorblatt (1) mit mindestens einer aktiven Klappe (7, 7') für Helikopter, bestehend aus einem Profilkörper (10) einschließlich oberer Profilseite (2), mindestens einem reversibel biegbaren, biegefestem Stellglied (6, 6') und der mindestens einen aktiven beweglichen Rotorblattklappe (7, 7'), wobei diese mindestens eine aktive bewegliche Rotorblattklappe (7, 7') durch das mindestens eine biegefeste Stellglied (6, 6') betätigt wird,
**dadurch gekennzeichnet, dass** das mindestens eine reversibel biegbare biegefeste Stellglied (6, 6') und die mindestens eine aktive bewegliche Rotorblattklappe (7, 7') an die obere Profilseite (2) des Profilkörpers (10) angepasst sind.

2. Das Rotorblatt (1) gemäß Anspruch 1,
**dadurch gekennzeichnet, dass** die obere Profilseite (2) des Profilkörpers (10) mit einer Tasche (8) ausgestattet ist, die das mindestens eine reversibel biegbare biegefeste Stellglied (6, 6') und die mindestens eine bewegliche Rotorblattklappe (7, 7') umfasst.

3. Das Rotorblatt (1) gemäß Anspruch 2,
**dadurch gekennzeichnet, dass** sich die Tasche (8) mit dem mindestens einen reversibel biegbaren biegefesten Stellglied (6, 6') und der mindestens einen beweglichen Rotorblattklappe 20 (7, 7') in Profilsehnenrichtung von einem Viertel der Profilsehnenlinie c/4 über die halbe Länge der Profilsehne c bis zu Dreiviertel der Profilsehnenlänge 3c/4 erstreckt.

4. Das Rotorblatt (1) gemäß Anspruch 2,
**dadurch gekennzeichnet, dass** sich die Tasche (8) mit dem mindestens einen reversibel biegbaren biegefesten Stellglied (6, 6') und der mindestens einen beweglichen Rotorblattklappe (7, 7') in radialer Richtung von 20-40%r/R bis ca. 80-85%r/R erstreckt, wobei R die Länge des Rotorblatts (1) ist.

5. Das Rotorblatt (1) gemäß Anspruch 1,
**dadurch gekennzeichnet, dass** das mindestens eine reversibel biegbare biegefeste Stellglied (6, 6') über ein Bimorph verfügt.

6. Das Rotorblatt (1) gemäß Anspruch 1,
**dadurch gekennzeichnet, dass** das mindestens eine reversibel biegbare biegefeste Stellglied (6, 6') über ein Trimorph verfügt.

7. Das Rotorblatt (1) gemäß Anspruch 5 oder 6,
**dadurch gekennzeichnet, dass** das mindestens eine reversibel biegbare biegefeste Stellglied (6, 6') und die mindestens eine bewegliche Rotorblattklappe (7, 7') über eine Schnittstelle, ein aktives und ein passiv poröses Teil verfügen.

8. Das Rotorblatt (1) gemäß Anspruch 1,
**dadurch gekennzeichnet, dass** das mindestens eine reversibel biegbare biegefeste Stellglied (6) in im Wesentlichen radialer Richtung entlang der mindestens einen beweglichen Rotorblattklappe (7) angebracht ist.

9. Das Rotorblatt (1) gemäß Anspruch 1,
**dadurch gekennzeichnet, dass** mindestens ein reversibel biegbares biegefestes Stellglied (6') in im Wesentlichen Profilsehnenrichtung entlang vorzugsweise beiden Seiten von der mindestens einen beweglichen Rotorblattklappe (T) angebracht ist.

10. Das Rotorblatt (1) gemäß Anspruch 1,
**dadurch gekennzeichnet, dass** das mindestens eine reversibel biegbare biegefeste Stellglied (6') mit einem Winkel in Profilsehnenrichtung entlang vorzugsweise beiden Seiten der mindestens einen beweglichen Rotorblattklappe (7') angebracht ist.

11. Das Rotorblatt (1) gemäß Anspruch 1,
**dadurch gekennzeichnet, dass** mehr als ein reversibel biegbares biegefestes 5 Stellglied (6, 6') und mehr als eine bewegliche Rotorblattklappe (7, 7') in im Wesentlichen radialer Richtung mit radial innen beweglichen Rotorblattklappen (7, 7') überlappend wie Schindeln angeordnet sind, radial an die äußeren Klappen (7, 7') angrenzend.

## Revendications

1. Pale de rotor (1) dotée d'au moins un rabat actif (7,7'), notamment une pale de rotor principal (1) d'hélicoptère dotée d'au moins un rabat actif (7, 7'), comprenant un corps de profil (10) possédant une surface supérieure (2), au moins un actionneur de cambrure à déformation réversible (6, 6'), le au moins un rabat de pale de rotor (7, 7') mobile et actif étant actionné par le au moins un actionneur de cambrure (6, 6'),
**caractérisée en ce que** le au moins un actionneur de cambrure à déformation réversible (6, 6') et le rabat de lame de rotor mobile et actif (7, 7') sont adaptés à la surface supérieure (2) du corps de profil (10).

2. Pale de rotor (1) selon la revendication 1,
**caractérisée en ce que** la surface supérieure (2) du corps de profil (10) est pourvue d'une cavité (8) enveloppant le au moins un actionneur de cambrure à déformation réversible (6, 6') et le au moins un rabat mobile (7, 7') de pale de rotor.

3. Pale de rotor (1) selon la revendication 2,
**caractérisée en ce que** la cavité (8) enveloppant le au moins un actionneur de cambrure à déformation réversible (6, 6') et le au moins un rabat mobile (7, 7') de pale de rotor s'étend dans le sens de la corde à partir du quart de la ligne de corde c/4 sur une longueur de la moitié de la corde c jusqu'aux trois quarts de la ligne de corde 3c/4.

4. Pale de rotor (1) selon la revendication 2,
**caractérisée en ce que** la cavité (8) enveloppant le au moins un actionneur de cambrure à déformation réversible (6, 6') et le au moins un rabat mobile (7, 7') de pale de rotor s'étend dans le sens radial à partir de 20-40 % r/R jusqu'à environ 80 à 85 % r/R, R étant la longueur de la pale de rotor (1).

5. Pale de rotor (1) selon la revendication 1,
**caractérisée en ce que** le au moins un actionneur de cambrure à déformation réversible (6, 6') comprend une partie bimorphe.

6. Pale de rotor (1) selon la revendication 1,
**caractérisée en ce que** le au moins un actionneur de cambrure à déformation réversible (6, 6') comprend une partie trimorphe.

7. Pale de rotor (1) selon l'une des revendications 5 et 6,
**caractérisée en ce que** le au moins un actionneur de cambrure à déformation réversible (6, 6') et le au moins un rabat mobile (7, 7') de pale de rotor comprennent une partie d'interface, une partie active et une partie poreuse passive.

8. Pale de rotor (1) selon la revendication 1,
**caractérisée en ce que** le au moins un actionneur de cambrure à déformation réversible (6) est connecté dans une direction essentiellement radiale à côté du au moins un rabat mobile (7) de pale de rotor.

9. Pale de rotor (1) selon la revendication 1,
**caractérisée en ce que** le au moins un actionneur de cambrure à déformation réversible (6') est connecté essentiellement dans le sens de la corde le long de préférence des deux côtés du au moins un rabat mobile (7') de pale de rotor.

10. Pale de rotor (1) selon la revendication 1,
**caractérisée en ce que** le au moins un actionneur de cambrure à déformation réversible (6') est connecté à un certain angle vis-à-vis du sens de la corde le long de préférence des deux côtés du au moins un rabat mobile (7') de pale de rotor.

11. Pale de rotor (1) selon la revendication 1,
**caractérisée en ce que** plus d'un actionneur de cambrure à déformation réversible (6, 6') et plus d'un rabat mobile (7, 7') de pale de rotor sont alignés dans une direction essentiellement radiale, les rabats (7, 7') de pale de rotor mobiles intérieurs dans le sens radial recouvrant comme des bardeaux de toit des rabats (7,7') extérieurs adjacents dans le sens radial.
